# EUROPÄISCHE PATENTSCHRIFT

(11) **EP 3 716 381 B1**
(45) Veröffentlichungstag und Bekanntmachung des Hinweises auf die Patenterteilung: **08.03.2023**
(21) Anmeldenummer: 20165101.5
(22) Anmeldetag: 24.03.2020
(51) Int. Cl.: H01M 8/0267, H01M 8/0263

(54) **BIPOLARPLATTE ZUR VERWENDUNG IN EINEM BRENNSTOFFZELLENSTAPEL**
BIPOLAR PLATE FOR USE IN A FUEL CELL STACK
PLAQUE BIPOLAIRE DESTINÉE À L'UTILISATION DANS UNE EMPILEMENT DE PILES À COMBUSTIBLE

(30) Priorität: 29.03.2019 DE 102019108160
(43) Veröffentlichungstag der Anmeldung: 30.09.2020
(73) Patentinhaber: Airbus Operations GmbH, 21129 Hamburg (DE)
(72) Erfinder: Hoffjann, Claus, 21129 Hamburg (DE); Wolff, Christian, 21129 Hamburg (DE)

(56) Entgegenhaltungen:
- DE-A1-102014 207 594
- DE-C1- 19 636 902
- JP-A- 2004 281 079
- US-A1- 2016 372 765

## Beschreibung

### TECHNISCHES GEBIET

Die Erfindung betrifft eine Bipolarplatte zur Verwendung in einem Brennstoffzellenstapel. Die Erfindung betrifft ferner einen Brennstoffzellenstapel sowie ein Fahrzeug mit einem derartigen Brennstoffzellenstapel.

### HINTERGRUND DER ERFINDUNG

Brennstoffzellen für einen Einsatz in Fahrzeugen werden häufig in Form von Brennstoffzellenstapeln realisiert, in denen sich Brennstoffzellen in wechselnder Polarität aneinanderreihen und über leitfähige Bipolarplatten elektrisch miteinander verbunden sind. Die Bipolarplatten werden weiterhin dazu verwendet, Sauerstoff bzw. Luft und Wasserstoff an die Brennstoffzellen zu leiten und weisen hierfür eine Struktur von Strömungskanälen auf, die als "flow field" bekannt ist. Durch den Brennstoffzellenbetrieb fällt Wärme an, die durch eine entsprechende Kühlung abgeführt werden muss. Insbesondere bei kompaktem Aufbau der Brennstoffzellen ist es erforderlich, die Wärme zuverlässig von den Brennstoffzellen zu entfernen, so dass sie auf ihrer Betriebstemperatur gehalten werden und diese nicht überschreiten und folglich zuverlässig betrieben werden. DE 10 2014 207594 A1 beschreibt eine Bipolarplatte umfassend eine Heatpipe.

### ZUSAMMENFASSUNG DER ERFINDUNG

Es ist eine Aufgabe der Erfindung, eine alternative Kühlvorrichtung für eine Brennstoffzelle vorzuschlagen, die eine zuverlässige Kühlung der Brennstoffzelle auch bei kompaktem Aufbau erlaubt.

Die Aufgabe wird gelöst durch eine Bipolarplatte mit den Merkmalen des unabhängigen Anspruchs 1. Vorteilhafte Weiterbildungen und bevorzugte Ausführungsformen sind den Unteransprüchen und der nachfolgenden Beschreibung zu entnehmen.

Es wird eine Bipolarplatte zur Verwendung in einem Brennstoffzellenstapel vorgeschlagen, aufweisend eine erste Begrenzungsfläche und eine hierzu parallel angeordnete zweite Begrenzungsfläche, wobei die Begrenzungsflächen in einem Abstand zueinander angeordnet sind und einen Zwischenraum definieren, wobei die Bipolarplatte mindestens einen Brennstoffzellenabschnitt mit einem in den Zwischenraum ragende Vertiefungen aufweisenden Strömungsfeld für einen direkten Kontakt mit einer Brennstoffzelle aufweist, sowie mindestens einen sich entlang der Begrenzungsflächen hiervon erstreckenden Kühlabschnitt, wobei mindestens eine Heatpipe in dem Zwischenraum angeordnet ist und sich zur Wärmeübertragung von dem Brennstoffzellenabschnitt in den Kühlabschnitt erstreckt.

Ein Brennstoffzellenstapel ist als eine Anordnung aus mehreren, zumindest elektrisch miteinander verbundenen Brennstoffzellen zu verstehen. Die Anordnung als Stapel ist eine zuverlässige und einfache technische Lösung, um durch Wahl der Anzahl der Brennstoffzellen die durch den Stapel generierbare elektrische Leistung zu erhöhen. Zur Erreichung dieser Anordnung sind einzelne Brennstoffzellen in wechselnder Polarität aneinander angereiht. Dazwischen befinden sich Bipolarplatten, die eine Fluidverbindung zwischen benachbarten Zellen verhindern, diese jedoch elektrisch miteinander verbinden. Dadurch ergibt sich eine elektrische Reihenschaltung von mehreren Brennstoffzellen, die bedarfsweise durch Hinzufügen weiterer Brennstoffzellen und Bipolarplatten ergänzbar ist.

Die Bipolarplatten sind ein wesentlicher Bestandteil eines solchen Brennstoffzellenstapels. Sie sind mit einer ausreichenden Stromfestigkeit und ausreichend gasdicht zu dimensionieren und werden erfindungsgemäß auch zur Kühlung der angrenzenden Brennstoffzellen verwendet.

Eine Bipolarplatte im Sinne der Erfindung weist zwei parallel zueinander ausgeführte Begrenzungsflächen auf, welche als die Flächen anzusehen sind, die außen an der Bipolarplatte vorliegen und die eigentliche Plattenform definieren. Die Bipolarplatten können etwa rund oder eckig ausgeführt sein. Der Abstand der beiden Begrenzungsflächen zueinander sollte möglichst gering sein, um die Plattenstärke und damit auch die entsprechende Dimension des Brennstoffzellenstapels zu minimieren. Der Brennstoffzellenabschnitt ist mit den jeweils angrenzenden Brennstoffzellen in Flächenkontakt zu bringen, um die Brennstoffzellen mit Sauerstoff oder Luft sowie Wasserstoff zu versorgen. Gleichzeitig nimmt jede Bipolarplatte an ihrem Brennstoffzellenabschnitt Wärme auf und gibt diese an den Kühlabschnitt ab. Dort kann die Wärme abgeführt werden.

Das Strömungsfeld ist dazu vorgesehen, die Edukte für den Brennstoffzellenprozess von einem beispielsweise randseitigen Bereich der Bipolarplatte an die Brennstoffzelle zu leiten und dort bevorzugt gleichmäßig zu verteilen. Das Strömungsfeld weist auf einer der Begrenzungsflächen Anodenkanäle und auf der anderen Begrenzungsfläche Kathodenkanäle auf. Das Strömungsfeld kann aus einer Vielzahl von Vertiefungen bestehen, die parallel zueinander angeordnet sind und durch in der jeweiligen Begrenzungsfläche endende Stege voneinander getrennt oder durch die Stege selbst ausgebildet sind. Das Strömungsfeld kann weiterhin durch einen auf der betreffenden Begrenzungsfläche angeordneten, umlaufenden und geschlossenen Steg begrenzt sein.

Die mindestens eine Heatpipe kann bevorzugt ein Kupfergitter aufweisen, das eine Kapillarwirkung gegenüber einem Wärmeträgermedium erzeugt. Derartige Heatpipes sind aus der Elektronik und insbesondere der Computertechnologie bekannt. Der Vorteil für eine Integration in Brennstoffzellen liegt darin, dass eine orientierungsneutrale und schwerkraftneutrale Einbaumöglichkeit eröffnet wird. Weiterhin besteht die Möglichkeit, das Wärmeträgermedium in einem geschlossenen Raum in Form der Röhre der Heatpipe zu transportieren, ohne eine Fluidverbindung mit der Umgebung zu erfordern. Bei einer in einer Bipolarplatte integrierten Heatpipe wird folglich eine elektrische Verbindung zu anderen Bipolarplatten vermieden. Jede Heatpipe in einer Bipolarplatte wirkt folglich wie ein eigener, passiv betriebener Wärmekreislauf. Dabei ist das Wärmeträgermedium für den jeweils bevorzugten Temperaturbereich anpassbar.

Durch die Integration der Heatpipe in die Bipolarplatte könnte diese tendenziell etwas dicker ausgestaltet werden, als üblich. Gleichzeitig ist es für die Auslegung der Bipolarplatte sinnvoll, die Strömungsfelder derart auszubilden, dass auch bei geringeren Eingangsdrücken der Edukte von beispielsweise 0,5 bis 0,7 bar absolut praktisch keine Leistungsverluste auftreten. Dies wird insbesondere dadurch ermöglicht, dass die Vertiefungen in den Strömungsfeldern eine ausreichende Tiefe besitzen. Da die Integration der Heatpipe mit einer tendenziell größeren Dicke einhergeht, führen die Heatpipe und die günstige Auslegung der Strömungsfelder zu einem geringeren notwendigen Druck der Edukte und damit einer möglichen Reduktion einer Verdichterleistung beispielsweise für Luft. Das möglicherweise etwas höhere Gewicht der erfindungsgemäßen Bipolarplatte sowie der eventuelle Volumenzuwachs eines Brennstoffzellenstapels werden durch Wegfall eines externen Kühlungssystems sowie eine geringere Verdichterleistung überkompensiert. Zusätzlich vermindert das Vermeiden von Pumpen und Ventilen für einen solchen Kühlkreislauf eine Ausfallwahrscheinlichkeit und Wartungs- und Investitionskosten. Dadurch kann die Lebensdauer eines Brennstoffzellensystems erhöht werden.

In einer vorteilhaften Ausführungsform ist der Kühlabschnitt einseitig an der Bipolarplatte angeordnet. Die Kühlung kann folglich auf einen einzelnen räumlichen Bereich neben einem eigentlichen Brennstoffzellenstapel konzentriert werden. Durch die einseitige Erstreckung des Kühlabschnitts ist auch lediglich ein einzelner Kühlluft- oder Kühlmittelkanal erforderlich, der die einzelnen Kühlabschnitte mit Luft bzw. einem Kühlmittel umströmt. Die Kühlabschnitte können dazu bevorzugt strömungsgünstig ausgeformt sein.

Es ist vorteilhaft, wenn die mindestens eine Heatpipe mäanderförmig in der Bipolarplatte verläuft. Die wirksame Kontaktfläche zwischen dem Wärme abgebenden Material der Bipolarplatte und der eigentlichen Heatpipe wird dadurch im Vergleich zu einer geradlinigen Erstreckung vergrößert.

Als Alternative könnte sich jedoch ein wesentlicher Abschnitt der mindestens einen Heatpipe entlang mindestens einer geraden Linie erstrecken. Ein geradliniger Verlauf könnte den notwendigen Bauraum der Bipolarplatte reduzieren, da eine Heatpipe bevorzugt nicht den Brennstoffzellenabschnitt überstreicht, sondern daneben verläuft.

Es ist dabei ebenso vorstellbar, dass sternförmig angeordnete Heatpipes Verwendung finden. Ein Mittelpunkt des Sterns könnte etwa in einem Brennstoffzellenabschnitt vorliegen. Der Mittelpunkt könnte dabei bevorzugt mittig in dem betreffenden Brennstoffzellenabschnitt angeordnet sein.

Es könnten allerdings auch mehrere Heatpipes in der Bipolarplatte verlaufen. Es könnten mäanderförmig verlaufende Heatpipes mit im Wesentlichen geraden Heatpipes gemischt werden oder mehrere mäanderförmig verlaufende oder mehrere geradlinig verlaufende Heatpipes Verwendung finden.

Bevorzugt ist zumindest eines der Strömungsfelder dazu ausgebildet, eine Brennstoffzelle bei einem Eduktdruck in einem Bereich von 0,5 bis 0,7 bar abs. mit einem Edukt zu versorgen. Eine aufwändige Verdichtung von Luft als Oxidant ist demzufolge nicht notwendig. Der Bereich von 0,5-0,7 bar abs. könnte den Betrieb beispielsweise eines Brennstoffzellensystems an Bord eines Flugzeugs in einem *nicht* druckbeaufschlagten Bereich erlauben, bei dem Luft alleine aus einer Außenluftzufuhr ermöglicht wird. Hierfür könnte eine einfache, durchströmende Belüftung der Kathodenseite mit Außenluft oder der Druckabfall zwischen einem druckbeaufschlagten Bereich, wie beispielsweise einer Flugzeugkabine, und einem Außenbereich bzw. der Umgebungsluft eines Luftfahrzeugs, ausreichen. Diese Durchlüftung könnte auch mit einer elektrischen oder anderweitig angetriebenen Ventilationsvorrichtung erfolgen.

Die Bipolarplatte könnte mehrteilig und durch ein materialabtragendes Fertigungsverfahren hergestellt sein. Das materialabtragende Fertigen ist im industriellen Maßstab einfach und effizient durchzuführen. Es eignen sich hierfür Fräs- oder Ätzverfahren. Die hierdurch realisierten Teile müssen allerdings anschließend zusammengesetzt werden. Dies könnte etwa durch schweißen, die elektrische Leitfähigkeit nicht beeinflussendes verkleben oder durch mechanische Verbindungsmittel erfolgen. Auch ein Gegeneinanderpressen von zwei Hälften einer Bipolarplatte in einem Brennstoffzellenstapel ist denkbar. Hierbei wäre darauf zu achten, dass die integrierte Heatpipe gegen Auslaufen der Wärmeträgerflüssigkeit abgedichtet wird und dass die beiden Pressflächen eine ausreichende elektrische Verbindung herstellen.

Alternativ sind auch umformende Verfahren denkbar, zum Beispiel Präge- oder Tiefziehverfahren. Weiter alternativ wäre auch ein Laserauftragsschweißen möglich.

Besonders vorteilhaft ist die Bipolarplatte mit einem generativen Fertigungsverfahren hergestellt und die mindestens eine Heatpipe ist frei von Fügestellen in die Bipolarplatte integriert. Unter Ausnutzung moderner generativer Fertigungsverfahren könnte eine besonders gewichtsoptimierte Bipolarplatte hergestellt werden, bei der keine separate Heatpipe hergestellt werden und eingesetzt werden muss, sondern direkt in die Struktur integriert wird.

In einer vorteilhaften Ausführungsform weist der Kühlabschnitt eine elektrische Isolierschicht auf. Bei erhöhter Luftfeuchtigkeit oder Nässe zwischen den Kühlabschnitten mehrerer Bipolarplatten besteht bei sehr geringen Abschnitten die Gefahr von Spannungsüberschlägen oder Kriechströmen. Durch die elektrische Isolierschicht kann dies jedoch zuverlässig verhindert werden. Bei der Verwendung von Aluminiumwerkstoffen zum Herstellen der Bipolarplatten könnte sich etwa eine Eloxalschicht anbieten. Diese könnten in einer vorteilhaften Variante schwarz eingefärbt sein, so dass eine bessere Wärmeabstrahlung gewährleistet wird.

Die Erfindung betrifft ferner ein Brennstoffzellensystem, das mehrere Brennstoffzellen aufweist, wobei die Brennstoffzellen in wechselnder Polarität angeordnet und paarweise durch je eine Bipolarplatte nach der vorigen Beschreibung elektrisch miteinander verbunden sind. Die Brennstoffzellen bilden folglich einen Stapel bzw. einen Brennstoffzellenstapel aus. Hierbei sollten die Kühlabschnitte sämtlicher Bipolarplatten in dieselbe Richtung des Brennstoffzellenstapels weisen, so dass diese leicht durch ein gemeinsames Kühlsystem gekühlt werden können.

Das Brennstoffzellensystem weist ferner ein Kühlsystem mit einem von einem Kühlmittel durchströmten Fluidkanal auf, in den die Kühlabschnitte der Bipolarplatten ragen. Der Fluidkanal kann derart ausgebildet sein, dass sämtliche Kühlabschnitte der Bipolarplatten in diesen hineinragen können und gemeinsam von dem Kühlmittel durchströmt werden. In einem besonders einfachen Fall kann als Kühlmittel Luft verwendet werden. Diese könnte etwa in Form des Oxidanten realisiert sein, der durch den Kühlvorgang vor dem Einströmen in die Brennstoffzellen vorgewärmt wird. Allerdings sind auch flüssige Kühlmittel denkbar, die zum Aufbau eines kompakteren Fluidkanals nutzbar sind. Dieser könnte eine geschlossene Wandung mit einem Fluideingang aufweisen, die mit einer Fluidquelle in Fluidverbindung bringbar ist.

Bevorzugt weist nur jede n-te Bipolarplatte einen Kühlabschnitt auf, wobei n eine ganze Zahl in einem Bereich von 1 bis 20 ist. Das Kühlsystem erlaubt damit das Kühlen des Brennstoffzellensystems durch eine begrenzte Anzahl von Kühlabschnitten, um das damit verbundene Gewicht zu reduzieren. Es ist beispielsweise denkbar, dass jede zweite Bipolarplatte keinen solchen Kühlabschnitt aufweist, so dass jede Brennstoffzelle jeweils nur an einer Seite gekühlt wird.

In einer weiter vorteilhaften Ausführungsform sind zwischen aufeinander folgenden Kühlabschnitten Abstandshalter angeordnet. Auch bei sehr dünnen Brennstoffzellen kann bei Verwendung der Abstandshalter ein versehentliches Berühren der Kühlabschnitte verhindert werden, so dass Kurzschlüsse und Kriechströme verhindert werden können.

Die Bipolarplatte könnte weiterhin eine Multisektorplatte mit mehreren Brennstoffzellenabschnitten sein, die unabhängig mit Edukten versorgbar sind. Die Multisektorplatte könnte zur einfachen Leistungsanpassung der Brennstoffzelle genutzt werden, so dass gezielt nur einzelne Segmente der Bipolarplatte mit Edukten versorgt werden. Die Multisektorplatte kann Heatpipes für jedes Segment vorsehen. Weiterhin könnten auch Heatpipes zwischen einzelnen Segmenten angeordnet werden.

Die Erfindung betrifft ferner ein Fahrzeug, aufweisend mindestens ein Brennstoffzellensystem nach der obigen Beschreibung. Das Fahrzeug kann weiterhin ein Flugzeug sein. Dort wird ein kompaktes Brennstoffzellensystem realisiert, das einfach zu kühlen ist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine erste Variante einer Bipolarplatte, die als Multisektorplatte ausgeführt ist, in einem Teilschnitt.
Fig. 2 zeigt eine zweite Variante einer Bipolarplatte, in einem Teilschnitt.
Fig. 3 zeigt eine schematische Darstellung eines Brennstoffzellensystems.
Fig. 4 zeigt ein Flugzeug mit einem darin integrierten Brennstoffzellensystem.

### DETAILLIERTE DARSTELLUNG EXEMPLARISCHER AUSFÜHRUNGSFORMEN

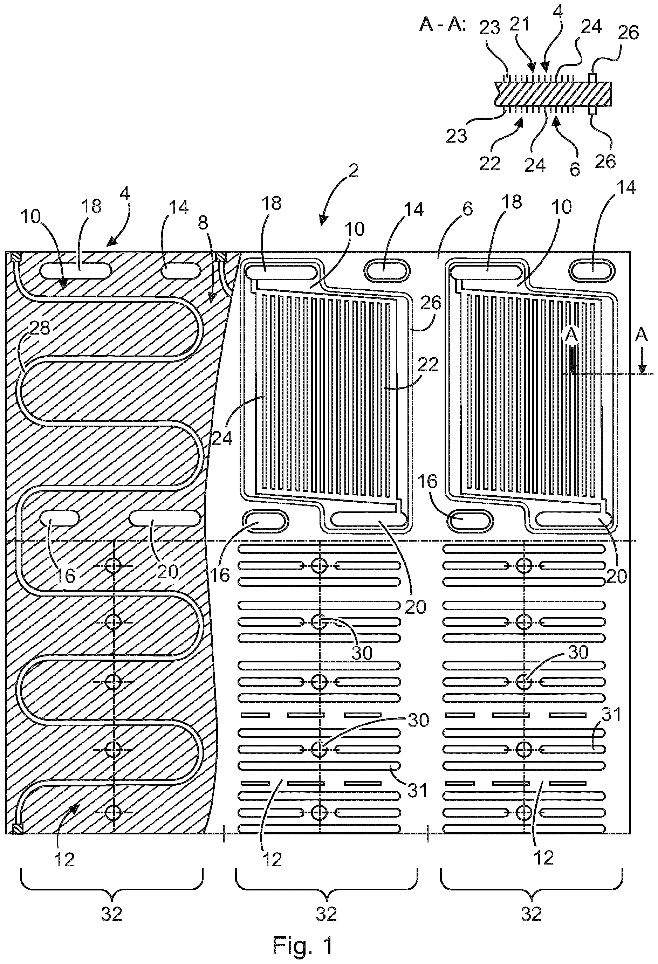

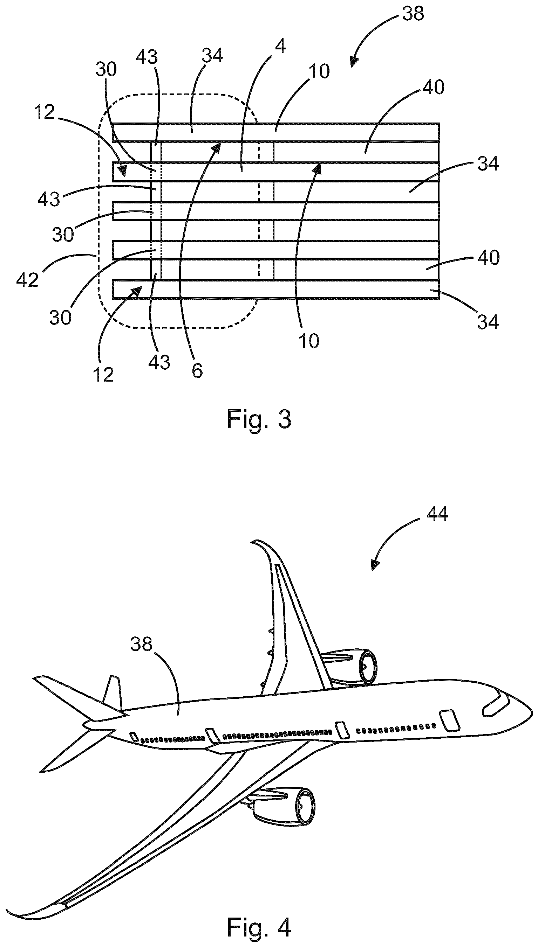

Fig. 1 zeigt eine Bipolarplatte 2 zur Verwendung in einem Brennstoffzellenstapel (in Fig. 3 gezeigt). Die Bipolarplatte 2 weist eine erste Begrenzungsfläche 4 (in dieser Ansicht die Rückseite) und eine hierzu parallel angeordnete zweite Begrenzungsfläche 6 auf. Beide Begrenzungsflächen 4 und 6 sind in einem Abstand zueinander angeordnet und definieren dadurch einen Zwischenraum 8. Dieser kann teilweise hohl sein. Beispielhaft könnte die Bipolarplatte 2 aus Aluminium mittels eines generativen Herstellverfahrens oder durch ein materialabtragendes Verfahren hergestellt sein.

Die Bipolarplatte 2 weist in dieser Darstellung drei separate Brennstoffzellenabschnitte 10 auf, wobei in der Zeichnungsebene der linke Brennstoffzellenabschnitt 10 aufgrund des Teilschnitts nur angedeutet ist. In der Zeichnungsebene unter jedem Brennstoffzellenabschnitt 10 ist jeweils ein Kühlabschnitt 12 gezeigt, wobei auch hier der linke Kühlabschnitt 12 aufgrund des Teilschnitts ebenso nur angedeutet ist.

Die Brennstoffzellenabschnitte 10 sind dazu vorgesehen, eine Brennstoffzelle mit Edukten zu versorgen. Hierzu sind erste Eduktzufuhrkanäle 14 und erste Eduktabfuhrkanäle 16 vorgesehen. Diese können ein in der ersten Begrenzungsfläche 4 angeordnetes Strömungsfeld mit dem zuzuführenden Edukt versorgen. Es sind ferner zweite Zufuhrkanäle 18 und zweite Eduktabfuhrkanäle 20 vorgesehen. Durch die zweiten Eduktzufuhrkanäle 18 gerät ein Edukt in ein zweites Strömungsfeld 22, das eine Reihe von parallel zueinander angeordneten Stegen 24 besitzt, welche zueinander Vertiefungen 23 einschließen oder ausbilden. Durch diese ergibt sich eine Reihe feiner Strömungskanäle, die ein Feld oder Gitter zwischen dem zweiten Eduktzufuhrkanal 18 und dem zweiten Eduktabfuhrkanal 20 aufspannen. Wird die Bipolarplatte 2 an einer Brennstoffzelle angebracht, überdeckt das zweite Strömungsfeld 22 eine Seite der Brennstoffzelle und sorgt folglich für eine gleichmäßige Verteilung des Edukts. Zur Abdichtung kann jeder Brennstoffzellenabschnitt 10 einen umlaufenden Rand 26 aufweisen, der ebenso als Steg ausgeführt ist und durch ein Andrücken der Bipolarplatte 2 an die Brennstoffzelle eine fluiddichte Verbindung herstellt.

Analog gilt dieser Aufbau für ein erstes Strömungsfeld 21, das in dieser Darstellung lediglich in einer Schnittansicht A-A sichtbar ist, da es sich in der ersten Begrenzungsfläche 4 befindet.

Beim Betrieb der Brennstoffzelle entsteht Wärme in den Brennstoffzellenabschnitten 10, welche abgeführt werden muss. In der Bipolarplatte 2 ist für jeden Brennstoffzellenabschnitt 10 daher eine Heatpipe 28 vorgesehen, die mäanderförmig von dem jeweiligen Brennstoffzellenabschnitt 10 zu dem jeweiligen Kühlabschnitt 12 verläuft. Die Heatpipe 28 unterstützt die Wärmeleitung zu den jeweiligen Kühlabschnitten 12. Da ein mäanderförmiger Verlauf gewählt ist, kann eine besonders gute Wärmeaufnahme in den Brennstoffzellenabschnitten 10 und eine besonders gute Wärmeabgabe in den Kühlabschnitten 12 erfolgen, da die von der Heatpipe 28 überstrichene Fläche bzw. die Lauflänge der Heatpipe 28 groß ist.

Der Kühlabschnitt 12 erstreckt sich von dem jeweiligen Brennstoffzellenabschnitt 10 lateral nach außen. Werden mehrere Bipolarplatten 2 in einem Brennstoffzellenstapel eingesetzt, wird folglich an den Brennstoffzellenabschnitten 10 ein Brennstoffzellenstapel ausgebildet, während die Kühlabschnitte 12 der einzelnen Bipolarplatten 2 dann in einem Abstand zueinander angeordnet sind. Durch die aufgrund des Abstands entstehende Lücke kann ein Kühlmittel strömen, das die Wärme des jeweiligen Kühlabschnitts 12 aufnimmt und von der Bipolarplatte 2 entfernt. Um in dieser Konfiguration ein versehentliches Berühren der Bipolarplatten zu verhindern, weist jeder Kühlabschnitt 12 eine Reihe von Bohrungen 30 auf, die zur Aufnahme von Abstandshaltern dienen.

Zur Verbesserung des Wärmeübergangs in den Kühlabschnitten 12 an das jeweilige Kühlmittel sind mehrere Rillen oder Nuten 31 vorgesehen. Diese können zu Verwirbelungen des Kühlmittels führen, was den Wärmeübertragungskoeffizienten erhöht und außerdem die wirksame Oberfläche vergrößern.

Die Bipolarplatte 2 in Fig. 1 ist als eine Multisektorplatte ausgeführt, die mehrere Brennstoffzellenabschnitte 10 aufweist. Die Bipolarplatte 2 besitzt folglich mehrere, benachbarte Sektoren 32. Es ist möglich, die Anzahl der Sektoren 32 sowohl zu verkleinern, als auch zu vergrößern. Ziel einer solchen Ausgestaltung liegt darin, flexibel eine unterschiedliche Anzahl von Brennstoffzellensegmenten zu betreiben oder abzuschalten, um auf unterschiedliche Belastungsszenarien eines Brennstoffzellenstapels eingehen zu können.

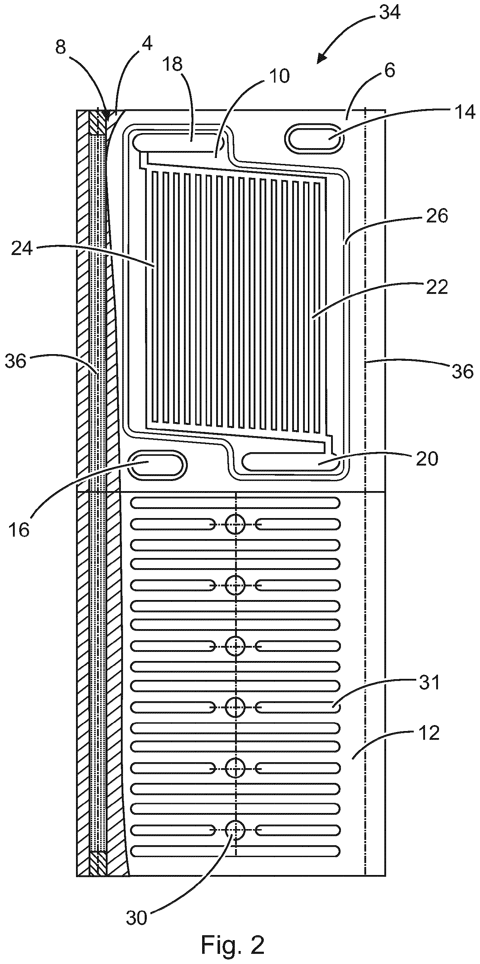

Fig. 2 zeigt eine etwas vereinfachte Variante einer Bipolarplatte 34, die lediglich einen einzelnen Brennstoffzellenabschnitt 10 und einen einzelnen Kühlabschnitt 12 aufweist. Es wird dadurch der Betrieb einer einzelnen Brennstoffzelle bzw. eines einzelnen Brennstoffzellensegments erlaubt. Die Wärmeleitung von dem Brennstoffzellenabschnitt 10 zu dem Kühlabschnitt 12 kann durch beispielhaft zwei Heatpipes 36 unterstützt werden, die geradlinig ausgeführt sind und parallel zueinander verlaufen. Beide sind auf einander gegenüberliegenden Seiten des Brennstoffzellenabschnitts 10 und des Kühlabschnitts 12 angeordnet. Da die Heatpipes 36 sich nur neben dem Brennstoffzellenabschnitt 10 entlang erstrecken, jedoch nicht durch ihn hindurch, kann die Bipolarplatte 34 folglich etwas dünner ausgeführt werden, als die Bipolarplatte 2 aus Fig. 1.

Fig. 3 zeigt sehr schematisch ein Brennstoffzellensystem 38 mit mehreren Brennstoffzellen 40, welche in umgekehrter Polarität jeweils zwischen zwei Bipolarplatten 34 angeordnet sind. Direkt an die Brennstoffzellen 40 grenzen die Brennstoffzellenabschnitte 10 an. Die Kühlabschnitte 12 befinden sich in einem Abstand zueinander und können in einem hier gestrichelt angedeuteten Fluidkanal 42 angeordnet werden. Dieser wird von einem Kühlmittel durchströmt und kann dabei die Wärme von den Kühlabschnitten 12 aufnehmen und die Kühlabschnitte 12 dadurch kühlen. Abstandshalter 43 können zwischen dein einzelnen Kühlabschnitten 12 angeordnet sein. Wie in den Fig. 1 und 2 gezeigt, können die Abstandshalter 43 an dedizierten Bohrungen 30 befestigt werden.

Schließlich zeigt Fig. 4 ein Flugzeug 44, in dem beispielhaft ein Brennstoffzellensystem 38 angeordnet ist. Dieses eignet sich besonders für eine Verwendung in dem Flugzeug 44, da durch die Heatpipes eine besonders kompakte Bauform möglich ist.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Bipolarplatte
- 4: erste Begrenzungsfläche
- 6: zweite Begrenzungsfläche
- 8: Zwischenraum
- 10: Brennstoffzellenabschnitt
- 12: Kühlabschnitt
- 14: erster Eduktzufuhrkanal
- 16: erster Eduktabfuhrkanal
- 18: zweiter Eduktzufuhrkanal
- 20: zweiter Eduktabfuhrkanal
- 21: erstes Strömungsfeld
- 22: zweites Strömungsfeld
- 23: Vertiefung
- 24: Steg
- 26: Rand
- 28: Heatpipe
- 30: Bohrung
- 31: Rille / Nut
- 32: Sektor
- 34: Bipolarplatte
- 36: Heatpipe
- 38: Brennstoffzellensystem
- 40: Brennstoffzelle
- 42: Fluidkanal
- 44: Flugzeug

## Patentansprüche

1. Bipolarplatte (2, 34) zur Verwendung in einem Brennstoffzellenstapel, aufweisend:
- eine erste Begrenzungsfläche (4) und
- eine hierzu parallel angeordnete zweite Begrenzungsfläche (6),
wobei die Begrenzungsflächen (4, 6) in einem Abstand zueinander angeordnet sind und einen Zwischenraum (8) definieren,
wobei die Bipolarplatte (2, 34) mindestens einen Brennstoffzellenabschnitt (10) mit mindestens einem in den Zwischenraum (8) ragende, Vertiefungen (23) aufweisenden Strömungsfeld (21, 22) für einen direkten Kontakt mit einer Brennstoffzelle (40) aufweist,
sowie mindestens einen sich entlang der Begrenzungsflächen (4, 6) hiervon erstreckenden Kühlabschnitt (12),
wobei mindestens eine Heatpipe (28, 36) in dem Zwischenraum (8) angeordnet ist und sich zur Wärmeübertragung von dem Brennstoffzellenabschnitt (10) in den Kühlabschnitt (12) erstreckt.

2. Bipolarplatte (2, 34) nach Anspruch 1,
wobei der Kühlabschnitt (12) einseitig an der Bipolarplatte (2, 34) angeordnet ist.

3. Bipolarplatte (2, 34) nach Anspruch 1 oder 2,
wobei die mindestens eine Heatpipe (28, 36) mäanderförmig in der Bipolarplatte verläuft.

4. Bipolarplatte (2, 34) nach einem der vorhergehenden Ansprüche,
wobei sich ein wesentlicher Abschnitt der mindestens einen Heatpipe (28, 36) entlang mindestens einer geraden Linie erstreckt.

5. Bipolarplatte (2, 34) nach einem der vorhergehenden Ansprüche,
wobei zumindest eines der Strömungsfelder (21, 22) dazu ausgebildet ist, eine Brennstoffzelle (40) mit einem Edukt zu versorgen wenn der Eduktdruck einen Wert in einem Bereich von 0,5 bis 0,7 bar abs. aufweist.

6. Bipolarplatte (2, 34) nach einem der vorhergehenden Ansprüche,
wobei die Bipolarplatte (2, 34) mehrteilig und durch ein materialabtragendes Fertigungsverfahren hergestellt ist.

7. Bipolarplatte (2, 34) nach einem der vorhergehenden Ansprüche,
wobei die Bipolarplatte (2, 34) mit einem generativen Fertigungsverfahren hergestellt ist und die mindestens eine Heatpipe (28, 36) frei von Fügestellen in die Bipolarplatte (2, 34) integriert ist.

8. Bipolarplatte (2, 34) nach einem der vorhergehenden Ansprüche,
wobei der Kühlabschnitt (12) eine elektrische Isolierschicht aufweist.

9. Brennstoffzellensystem (38),
aufweisend mehrere Brennstoffzellen (40),
wobei die Brennstoffzellen (40) in wechselnder Polarität angeordnet und paarweise durch je eine Bipolarplatte (2, 34) nach einem der vorhergehenden Ansprüche elektrisch miteinander verbunden sind.

10. Brennstoffzellensystem (38) nach Anspruch 9,
ferner aufweisend ein Kühlsystem mit einem von einem Kühlmittel durchströmten Fluidkanal (42), in den die Kühlabschnitte (12) der Bipolarplatten (2, 34) ragen.

11. Brennstoffzellensystem (38) nach Anspruch 9 oder 10,
wobei nur jede n-te Bipolarplatte (2, 34) einen Kühlabschnitt (12) aufweist, und
wobei n eine ganze Zahl in einem Bereich von 1 bis 20 ist.

12. Brennstoffzellensystem (38) nach einem der Ansprüche 9 bis 11,
wobei zwischen aufeinander folgenden Kühlabschnitten (12) Abstandshalter (43) angeordnet sind.

13. Brennstoffzellensystem nach einem der Ansprüche 9 bis 12,
wobei die Bipolarplatte (2, 34) eine Multisektorplatte mit mehreren Brennstoffzellenabschnitten (10) ist, die unabhängig mit Edukten versorgbar sind.

14. Fahrzeug (44), aufweisend mindestens ein Brennstoffzellensystem (38) nach einem der Ansprüche 9 bis 13.

15. Fahrzeug (44) nach Anspruch 14, wobei das Fahrzeug (44) ein Flugzeug (44) ist.

## Claims

1. A bipolar plate (2, 34) for use in a fuel cell stack comprising:
- a first boundary surface (4) and
- a second boundary surface (6) parallel thereto,
the boundary surfaces (4, 6) being spaced apart and defining a space (8),
the bipolar plate (2, 34) having at least one fuel cell section (10) with at least one flow field (21, 22) projecting into the intermediate space (8) and having depressions (23) for direct contact with a fuel cell (40),
and at least one cooling section (12) extending along the boundary surfaces (4, 6) thereof, wherein at least one heat pipe (28, 36) is disposed in said space (8) and extends from said fuel cell section (10) into said cooling section (12) for heat transfer.

2. Bipolar plate (2, 34) according to claim 1,
wherein the cooling section (12) is arranged on one side of the bipolar plate (2, 34).

3. Bipolar plate (2, 34) according to claim 1 or 2,
wherein the at least one heat pipe (28, 36) extends in a meandering manner in the bipolar plate.

4. Bipolar plate (2, 34) according to any one of the preceding claims,
wherein a substantial portion of the at least one heat pipe (28, 36) extends along at least one straight line.

5. Bipolar plate (2, 34) according to any one of the preceding claims,
wherein at least one of the flow fields (21, 22) is adapted to supply a fuel cell (40) with a reactant when the reactant pressure has a value in a range of 0.5 to 0.7 bar abs.

6. Bipolar plate (2, 34) according to any one of the preceding claims,
wherein the bipolar plate (2, 34) is multi-part and manufactured by a material-removing manufacturing process.

7. Bipolar plate (2, 34) according to any one of the preceding claims,
wherein the bipolar plate (2, 34) is produced by a generative manufacturing process and the at least one heat pipe (28, 36) is integrated into the bipolar plate (2, 34) free of joints.

8. Bipolar plate (2, 34) according to any one of the preceding claims,
wherein the cooling section (12) comprises an electrical insulation layer.

9. A fuel cell system (38),
comprising a plurality of fuel cells (40),
wherein the fuel cells (40) are arranged in alternating polarity and are electrically connected in pairs by a respective bipolar plate (2, 34) according to one of the preceding claims.

10. Fuel cell system (38) according to claim 9,
further comprising a cooling system with a fluid channel (42) through which a coolant flows and into which the cooling sections (12) of the bipolar plates (2, 34) project.

11. Fuel cell system (38) according to claim 9 or 10,
wherein only every nth bipolar plate (2, 34) comprises a cooling section (12), and
wherein n is an integer in a range from 1 to 20.

12. Fuel cell system (38) according to any one of claims 9 to 11,
wherein spacers (43) are arranged between successive cooling sections (12).

13. Fuel cell system according to any one of claims 9 to 12,
wherein the bipolar plate (2, 34) is a multi-sector plate having a plurality of fuel cell sections (10) which can be supplied with reactants independently.

14. A vehicle (44) comprising at least one fuel cell system (38) according to any one of claims 9 to 13.

15. Vehicle (44) according to claim 14, wherein the vehicle (44) is an aircraft (44).

## Revendications

1. Plaque bipolaire (2, 34) destinée à être utilisée dans un empilement de piles à combustible, comprenant :
- une première surface de délimitation (4) et
- une deuxième surface de délimitation (6) disposée parallèlement à la première,
les surfaces de délimitation (4, 6) étant disposées à une certaine distance l'une de l'autre et définissant un espace intermédiaire (8),
la plaque bipolaire (2, 34) présentant au moins une section de pile à combustible (10) avec au moins un champ d'écoulement (21, 22) s'étendant dans l'espace intermédiaire (8) et présentant des renfoncements (23) pour un contact direct avec une pile à combustible (40), ainsi qu'au moins une section de refroidissement (12) s'étendant le long des surfaces de délimitation (4, 6) de celui-ci,
au moins un caloduc (28, 36) étant disposé dans l'espace (8) et s'étendant de la section de pile à combustible (10) à la section de refroidissement (12) pour le transfert de chaleur.

2. Plaque bipolaire (2, 34) selon la revendication 1,
dans laquelle la section de refroidissement (12) est disposée sur un côté de la plaque bipolaire (2, 34).

3. Plaque bipolaire (2, 34) selon la revendication 1 ou 2,
dans laquelle l'au moins un caloduc (28, 36) s'étend en forme de méandres dans la plaque bipolaire.

4. Plaque bipolaire (2, 34) selon l'une des revendications précédentes,
dans laquelle une partie substantielle dudit au moins un caloduc (28, 36) s'étend le long d'au moins une ligne droite.

5. Plaque bipolaire (2, 34) selon l'une des revendications précédentes,
dans laquelle au moins l'un des champs d'écoulement (21, 22) est conçu pour alimenter une pile à combustible (40) avec un éduit lorsque la pression de l'éduit a une valeur comprise dans une plage de 0,5 à 0,7 bar abs.

6. Plaque bipolaire (2, 34) selon l'une des revendications précédentes,
dans laquelle la plaque bipolaire (2, 34) est fabriquée en plusieurs parties et par un procédé de fabrication par enlèvement de matière.

7. Plaque bipolaire (2, 34) selon l'une des revendications précédentes,
dans lequel la plaque bipolaire (2, 34) est fabriquée par un procédé de fabrication générative et le au moins un caloduc (28, 36) est intégré dans la plaque bipolaire (2, 34) sans points d'assemblage.

8. Plaque bipolaire (2, 34) selon l'une des revendications précédentes,
dans laquelle la section de refroidissement (12) comprend une couche d'isolation électrique.

9. Système de piles à combustible (38),
comprenant plusieurs piles à combustible (40),
Les piles à combustible (40) étant disposées en polarité alternée et reliées électriquement entre elles par paire par une plaque bipolaire (2, 34) selon l'une des revendications précédentes.

10. Système de piles à combustible (38) selon la revendication 9,
présentant en outre un système de refroidissement avec un canal de fluide (42) traversé par un agent de refroidissement, dans lequel les sections de refroidissement (12) des plaques bipolaires (2, 34) font saillie.

11. Système de piles à combustible (38) selon la revendication 9 ou 10,
dans lequel seulement chaque n-ième plaque bipolaire (2, 34) comprend une section de refroidissement (12), et
où n est un nombre entier compris dans une plage de 1 à 20.

12. Système de piles à combustible (38) selon l'une quelconque des revendications 9 à 11, dans lequel des entretoises (43) sont disposées entre des sections de refroidissement (12) successives.

13. Système de piles à combustible selon l'une des revendications 9 à 12,
dans lequel la plaque bipolaire (2, 34) est une plaque multisectorielle comprenant plusieurs sections de pile à combustible (10) qui peuvent être alimentées indépendamment en éduits.

14. Véhicule (44) comprenant au moins un système de pile à combustible (38) selon l'une quelconque des revendications 9 à 13.

15. Véhicule (44) selon la revendication 14, dans lequel le véhicule (44) est un avion (44).
